# EUROPÄISCHE PATENTSCHRIFT

(11) **EP 2 150 601 B1**
(45) Veröffentlichungstag und Bekanntmachung des Hinweises auf die Patenterteilung: **20.04.2011**
(21) Anmeldenummer: 08749948.9
(22) Anmeldetag: 30.04.2008
(51) Int. Cl.: C10B 19/00, C10B 47/34, C10B 49/22

(54) **VERFAHREN FÜR DIE THERMISCHE ZERSETZUNG EINES AUSGANGSSTOFFES MIT FREMDPARTIKELN**
METHOD FOR THERMALLY DISINTEGRATING A STARTING MATERIAL USING FOREIGN PARTICLES
PROCÉDÉ DE DÉCOMPOSITION THERMIQUE D'UNE MATIÈRE DE BASE AU MOYEN DE PARTICULES ÉTRANGÈRES

(30) Priorität: 25.05.2007 DE 102007024706
(43) Veröffentlichungstag der Anmeldung: 10.02.2010
(73) Patentinhaber: Gebr. Lödige Maschinenbau-gesellschaft Mit Beschränkter Haftung, 33102 Paderborn (DE)
(72) Erfinder: SCHMIDT, Alfons, 33129 Delbrück (DE); SICKELMANN, Hans-Jürgen, 76149 Karlsruhe (DE); GROB, Armin, 33102 Paderborn (DE)
(74) Vertreter: Gille, Christian
(86) Internationale Anmeldenummer: PCT/EP2008/055370
(87) Internationale Veröffentlichungsnummer: WO 2008/145474

(56) Entgegenhaltungen:
- EP-A- 1 016 451
- EP-A- 1 314 770
- GB-A- 268 613
- RU-C1- 2 260 615
- US-A- 1 712 082
- US-A- 3 841 994
- US-A- 4 401 553

## Beschreibung

Die Erfindung betrifft ein Verfahren für die thermische Zersetzung eines Ausgangsstoffes und zwar insbesondere für die Zersetzung von Tiermehl, Ölschlämmen beispielsweise von Tankerreinigungen, Autofluff (auch Autofluffy genannt), basisches Glyzerin zum Beispiel aus einer Biodieselgewinnung, Lackschlämmen aus Lackierereien, kontaminierte Böden, beschichtetes Holz, Kunststoffe wie Plexiglas. Nach dem vorliegenden Verfahren werden in nahezu allen Fällen organische Ausgangsstoffe thermisch zersetzt.

Mit der vorliegenden Erfindung wird also insbesondere das Ziel verfolgt, Sondermüll geeignet thermisch zersetzen und so geeignet entsorgen zu können. Sondermüll ist ein Abfallstoff, der Gefährlichkeitsmerkmale aufweist und somit eine mögliche Gefahr für die Gesundheit oder Umwelt darstellt. An die Entsorgung solcher Abfälle werden in vielen Staaten hohe Anforderungen an die technischen Anlagen, die angewendeten Verfahren und die Dokumentation und den Verbleib der gefährlichen Abfälle gestellt.

Allein in der Europäischen Gemeinschaft fallen beispielsweise pro Jahr mehrere Millionen Tonnen an Tiermehl an, die es zu entsorgen gilt. Eine Nutzung von Tiermehl als Tierfutter ist wegen der BSE - Gefahr inzwischen verboten. Aus vergleichbaren Gründen ist eine Nutzung als Düngemittel nicht möglich.

Tiermehl wird derzeit zwecks Entsorgung als Sekundörbrennstoff beispielsweise in der Zementindustrie eingesetzt. Die Zementindustrie lässt sich für diese Form der Entsorgung von Tiermehl bezahlen. Die Verwendung von Tiermehl als Ersatzbrennstoff geht aus der WO 2005/068908 hervor. Dass Tiermehl derzeit in erster Linie durch Müllverbrennung entsorgt wird, wird in der DE 201 03 293 U1 beschrieben.

Aus der DE 102 12 1 04 A1 ist ein Verfahren zur Verwertung von Tiermehl bekannt, bei dem Tiermehl in einem Metallbad so zum Beispiel in einem Zinnbad oder Zinkbad bei einer Temperatur des Metallbads zwischen 250°C und 450°C durch Pyrolyse in einem Reaktor zersetzt wird. Problematisch ist die Giftigkeit des flüssigen Metalls. Außerdem ist das Verfahren aufwendig.

Nach dem Stand der Technik wird ein Pyrolyseverfahren, also eine thermische Zersetzung unter Ausschluss von Sauerstoff großtechnisch üblicherweise in einem vertikalen Reaktionssystem durchgeführt. Ein vertikales Reaktionssystem umfasst einen siloförmigen, von außen beheizten Behälter und ein nahe beim Boden vorgesehenes Mischwerkzeug. Problematisch ist bei einem solchem System, dass das Produktbett zunächst ausschließlich Feststoffe umfasst und somit feste Ausgangsstoffe gerührt werden müssen. In solchen Fällen ist die erforderliche Produktbewegung schwierig. Eine unzureichende Produktbewegung führt zu einem unzureichenden Wärmeübergang. Die Wärme muss über die Wände des siloförmigen Behälters zu den festen Ausgangsstoffen gelangen, was bei unzureichender Produktbewegung nur langsam gelingt. Eine 100% Zersetzung von Tiermehl kann so kaum oder nur mit einem unvertretbar hohem Zeitaufwand gewährleistet werden. Die verbleibenden Feststoffrückstände sind nicht mit einer so hohen Sicherheit frei von gesundheitsschädlichen Verunreinigungen, dass diese beispielsweise als Bodenverbesserer eingesetzt werden könnten. Die Zugabe von giftigen Schwermetallen während der Zersetzung schafft weitere Entsorgungsprobleme. Auch kann die Zersetzung nur chargenweise durchgeführt werden. Ein kontinuierlicher oder quasikontinuierlicher Betrieb ist nicht möglich. Auch aus diesem Grund ist das Verfahren zeitlich aufwendig und damit entsprechend unwirtschaftlich.

Um eine Pyrolyse großtechnisch kontinuierlich durchführen zu können, werden Ausgangsstoffe nach dem Stand der Technik einer sich drehenden Trommel bzw. einem sich drehenden Rohr zugeführt. Das Produktbett wird während der Drehung umgewälzt, um für eine gute Durchmischung zu sorgen, wie beispielsweise aus der Druckschrift WO 2005/068908 bekannt ist. Die Trommel bzw. das Rohr wird von außen, in der Regel von unten mit Gasbrennern beheizt. Die Zuführung des Ausgangsstoffs geschieht über ein Ende der Trommel. Am anderen Ende der Trommel werden aus dem Produktbett nach unten hin die entstandenen Feststoffe und nach oben hin die entstandenen gasförmigen Substanzen entnommen. Kondensierbare Anteile im Gas werden nachfolgend durch Kondensation abgeschieden.

Bei einem derartigen kontinuierlichen Verfahren ist es besonders problematisch sicherzustellen, dass Tiermehl tatsächlich vollständig zersetzt wird. Es kann also passieren, dass die aus der Zersetzung resultierenden Feststoffe noch unzersetztes Tiermehl enthalten. Entsorgungsprobleme von Tiermehl können so nicht gelöst werden. Auch können bei dem beschriebenen kontinuierlichen Verfahren thermische Überhitzungen auftreten, wenn die Trommel von unten mit Gasbrennern beheizt wird. Es ist außerdem aufgrund der Zu- und Ableitungen sowie der Rotation der Trommel technisch schwierig, zuverlässig einen Ausschluss von Sauerstoff in der Trommel zu gewährleisten.

Problematisch ist ferner bei dem genannten Stand der Technik, dass die Zersetzungsprodukte zumindest teilweise zunächst klebrig sind und Verklumpungen und Anhaftungen an Wandoberflächen entstehen, wie aus der WO 2005/068908 bekannt ist. Dies behindert weiter den erforderlichen Wärmetransport und damit die Pyrolyse. Es ist schwierig, eine vollständige thermische Zersetzung zu gewährleisten.

Aus der EP 1 314 770 B1 ist ein elektrisch beheizter Wirbelbettreaktor bzw. Horizontalmischer für die Pyrolyse von Tiermehl bekannt. Eine hinreichend vollständige Zersetzung des Tiermehls kann durch diese Lehre nicht gewährleistet werden, um Zersetzungsprodukte beispielsweise als Bodenverbesserer weiter verwerten zu können. So behindern auch hier während der Pyrolyse entstehende Verklumpungen die Zuverlässigkeit der angestrebten Zersetzungen.

Vergleichbare Probleme treten bei den weiteren eingangs genannten organischen Ausgangsstoffen auf, wenn diese zersetzt werden sollen.

Aus der DE 508 566 ist ein beheizter Ofen für die Tieftemperatur-Verkokung von Brennstoffen bekannt. In einer sich drehenden, beheizten Trommel befinden sich erhitzte Stahlkugeln von derartiger Größe und Gewicht, dass der Brennstoff nur bis zu einem gewissen Grad gebrochen wird. Eine umständliche Einrichtung im Ofen wie Schnecke, Schaufelwelle oder Rechen soll so vermieden werden. Wie ein problematisch zu entsorgender Sondermüll zuverlässig und derart vollständig thermisch zersetzt werden kann, dass eine sehr viel teurere anderweitige Entsorgung von Sondermüll nicht mehr erforderlich ist, geht aus dieser Druckschrift nicht hervor.

Die Druckschrift DE 932 789 offenbart ein Verfahren für die Entgasung von staubförmigem oder feinkörnigen Brennstoff in einer Mischschnecke. Die für die Entgasung erforderliche Wärmeenergie wird zugeführt, in dem der Brennstoff zusammen mit erhitzten staubförmigen oder feinkörnigen, beispielsweise aus Metall bestehenden Wärmeträgern in die Schnecke gefüllt wird. Das hieraus bekannte Verfahren ist weder dazu bestimmt noch dafür geeignet, Sondermüll thermisch zuverlässig so vollständig zu zersetzen, dass eine anderweitige teure Entsorgung entfallen kann.

Das Patent US3841994 zeigt ein kontinuierliches Verfahren zur Pyrolyse von Ölschiefer in einer horizontalen Trommel mit Pellets aus einem inerten Material. Die hierzu verwendeten Pellets werden im Kreis geführt und vor Zugabe zum sich drehenden Pyrolyseofen aufgeheizt.

Das Dokument EP 1 314 770 beschreibt ein Verfahren zur diskontinuierlichen Pyrolyse von organischem Material in einem Horizontalmischer, wobei durch wiegen des Reaktors das Ende der Reaktion bestimmt werden kann. Zu beginn eines Zyklus' wird erst eine kleine Menge des Ausgangsmaterials pyrolisiert und nach dieser Pyrolyse mit der weiteren Beladung begonnen. Nach jedem Zyklus wird dann die gesamte Produktmenge entnommen.

Aufgabe der Erfindung ist die Schaffung eines Verfahrens, mit dem großtechnisch eine gewünschte thermische Zersetzung verbessert erreicht wird und zwar insbesondere eine thermische Zersetzung von Sondermüll wie zum Beispiel Tiermehl.

Die Aufgabe der Erfindung wird durch thermische Zersetzung eines Ausgangsstoffes, insbesondere eines organischen Ausgangsstoffs gelöst, welches die Merkmale des Anspruchs 1 umfasst.

Die Aufgabe wird gemäß Anspruch 1 gelöst.

Zur Lösung der Aufgabe werden Fremdpartikel, die thermisch nicht zersetzt und auch nicht verflüssigt werden, in das Produktbett bzw. Mischgut eingebracht. Die Zugabe der Fremdpartikel vermeidet aufgrund der Bewegung, dass sich größere Klumpen im Produktbett bzw. Mischgut während der Pyrolyse bilden. Auch sorgen die Fremdpartikel dafür, dass Ablagerungen an den Wänden des Behälters, in dem die Pyrolyse durchgeführt wird, wieder gelöst werden. Insgesamt wird so erreicht, dass Verklumpungen und Ablagerungen reduziert werden und so der Wärmetransport innerhalb des Produktbettes verbessert wird. Entsprechend schneller und vollständiger verläuft die thermische Zersetzung. Fremdpartikel sind Partikel, die sich vom Ausgangsstoff sowie von den Zersetzungsprodukten oder eventuell auftretenden Zwischenprodukten unterscheiden. Fremdpartikel im Sinne der vorliegenden Erfindung sind vor allem aus Metall bestehende Kugeln.

Die Größe der Fremdpartikel ist bevorzugt so zu wählen, dass die Korngröße sich von der Korngröße der aus der thermischen Zersetzung resultierenden Feststoffe derart unterscheiden, dass die Fremdpartikel durch Sieben von den aus der thermischen Zersetzung resultierenden Feststoffen getrennt werden können. So kann besonders einfach der aus der thermischen Zersetzung resultierende Feststoff von den Fremdstoffen befreit werden. In der Regel liegt der bei der Pyrolyse entstehende Feststoff in Form von feinstpulveriger Asche vor. Ein Fremdpartikeldurchmesser von 1 bis 2 mm hat sich bewährt, um mit der Entnahme der Feststoffe aus dem Pyrolysebehälter die Fremdpartikel sofort heraussieben zu können.

Das Material der Fremdpartikel wird vorzugsweise so gewählt, dass dieses sich inert gegenüber über dem jeweiligen Ausgangsstoff sowie gegenüber den Zersetzungsprodukten verhält, um so die aus der thermischen Zersetzung resultierenden Produkte nicht zu verunreinigen sowie den Erhalt der Fremdpartikel zu gewährleisten.

Vorzugsweise bestehen die Fremdpartikel aus einem gut wärmeleitleitenden Material und zwar vorzugsweise aus Metall. Es können aber beispielsweise auch Materialien wie Quarzsand oder Keramikgranulat verwendet werden. Durch Vorsehen von gut wärmeleitfähigen Materialien gelingt ein verbesserter Wärmetransport während der Pyrolyse, also während der thermischen Zersetzung. Die Fremdpartikel nehmen Wärme von den Wänden des Behälters auf und geben diese Wärme im Inneren des Produktbettes über eine damit vergrößerte Oberfläche wieder ab. Insgesamt wird so der Wärmeübergang im Vergleich zum Stand der Technik deutlich verbessert. Die Zersetzung wird so deutlich beschleunigt. Das Durchlaufen von unerwünschten Phasenübergängen wie zum Beispiel plastische oder zähe Konsistenzen wird zumindest erheblich reduziert. Entsprechend schneller, gleichmäßiger und vollständiger werden Ausgangsstoffe thermisch zersetzt.

Stahl ist in vielen Fällen geeignet, um die verschiedenen Anforderungen an das Material der Fremdpartikel zu erfüllen, also auf der einen Seite eine hinreichend gute Wärmeleitfähigkeit bereitzustellen und auf der anderen Seite sich inert gegenüber dem Ausgangsstoff und den Zersetzungsprodukten zu verhalten. Ein Edelstahl oder entsprechende laugen- und säurebeständigen Sonderstähle sind zu bevorzugen, wenn Säure oder Lauge bei einer Zersetzung entsteht. Auch die mechanische Stabilität von Stahl ist geeignet, um sich mechanisch hinreichend stabil zu verhalten.

Die Fremdpartikel weisen vorzugsweise einen Durchmesser von wenigen Millimetern und zwar vor allem von maximal 8 mm, vorzugsweise von nicht mehr als 4 Millimetern auf. Die Fremdpartikel weisen ferner vorzugsweise eine Mindestgröße von 0,5 Millimetern, besonders bevorzugt von wenigstens 1 mm auf. Die gewünschten mechanischen und wärmeleitfähigen Wirkungen lassen sich mit Partikeln dieser Größe besonders gut erzielen. Eine Obergrenze von 8 mm sollte regelmäßig nicht überschritten werden, um mechanische Beschädigungen zu vermeiden. Auch führen zu große Durchmesser grundsätzlich zu schlechteren Ergebnissen. Zu kleine Durchmesser bei den Fremdpartikeln haben zur Folge, dass eine Trennung von den festen Zersetzungsprodukten nur schwierig erreicht werden kann.

In einer Ausgestaltung des Verfahrens werden durch thermische Zersetzung entstehenden Feststoffe genutzt, um diese zusätzlich zu den Fremdpartikeln zusammen mit dem Ausgangsstoff dem Produktbett zuzuführen, um die oben genannten mechanischen und/ oder thermischen Wirkungen zu erzielen. Dies kann das erfindungsgemäße Verfahren unterstützen.

Die Pyrolyse, also die thermische Zersetzung unter Ausschluss von Sauerstoff wird mit bzw. in einem Horizontalmischer durchgeführt. So wird während der Pyrolyse ein Wirbelbett mechanisch erzeugt. Im Vergleich zur Pyrolyse in einem sich drehenden Rohr findet eine Verwirbelung und nicht lediglich eine Umwälzung statt. Durch die Verwirbelung wird auf der einen Seite der Wärmeübergang von der Wand in das Produktbett verbessert und ein Temperaturgefälle innerhalb des Bettes vermieden. Auf der anderen Seite werden die Ausgangsstoffe, Fremdpartikel und entstehenden Produkte besser miteinander vermischt. Es findet so eine homogener verteilte Pyrolyse statt. Dadurch ist verbessert gewährleistet, dass die entnommenen Produkte tatsächlich vollständig thermisch zersetzt werden. Es verbleiben also keine nicht thermisch zersetzten Ausgangsstoffe in den Produkten. Auch ist es einfacher im Vergleich zu einem Drehrohr, den Ausschluss von Sauerstoff zu gewährleisten, da der Behälter des Horizontalmischers im Unterschied zum Drehrohr nicht bewegt wird. Gasdichte Anschlüsse können daher einfacher bereitgestellt werden.

In einer weiter verbesserten Ausgestaltung der Erfindung wird als Horizontalmischer ein Pflugscharmischer verwendet, der beispielsweise aus der Druckschrift "Lebensmitteltechnik, Heft 2, Seite 66-74, 5. Jahrgang, 1973" bekannt ist. So wird weiter verbessert ein Wirbelbett erzeugt.

In einer weiter verbesserten Ausführungsform der Erfindung wird ein Horizontalmischer verwendet, der wandnah angeordnete Schleuderschaufeln sowie achsennah angeordnete Rückförderbleche umfasst und zwar insbesondere wenn die Ausgangsstoffe und damit das Mischgut besonders grobstückig sind. Bei einer entsprechenden Rotation der Schleuderschaufeln sowie der Rückförderbleche wird das Mischgut von den Schleuderschaufeln von der äußeren Wand weg in Richtung Achse des Mischwerkzeugs transportiert. Die Rückförderbleche fördern das Mischgut in Richtung äußere Wand bzw. in Richtung Schleuderschaufeln. Dadurch wird die gewünschte Durchmischung des Mischguts weiter verbessert gewährleistet und somit ein weiter verbessertes Ergebnis erzielt, bei dem die Vollständigkeit der Zersetzung verbessert sichergestellt ist. Auch kann besonders schnell zersetzt werden. Zum Beispiel bei der Zersetzung von Kaliseifen bei Rückständen von Biodiesel kommt es auf eine sehr schnelle Zersetzung an, wie durchgeführte Versuche gezeigt haben. Andernfalls können nachteilhafte Zähphasen auftreten. Vor allem bei grobstückigem Mischgut ist der Einsatz eines solchen Horizontalmischers vorteilhafter. Ein solcher Mischer ist beispielsweise aus der Druckschrift EP 1016451 A1 bekannt.

Aus vergleichbaren Gründen wird ein Horizontalmischer eingesetzt, wie er aus der Druckschrift DE-AS 1101113 bekannt ist. Zwei verschieden angeordnete Schaufelgruppen fördern entgegengesetzt, was bei grobem Mischgut besonders vorteilhaft und außerdem produktschonend ist.

Der Horizontalmischer umfasst in einer Ausführungsform Messerköpfe, die der Zerkleinerung des Mischguts während der Pyrolyse dienen. Dies kann die thermische Zersetzung weiter fördern.

Der zylinderförmige Mantel des Behälter, in dem die Pyrolyse durchgeführt wird, wird vorzugsweise vollflächig beheizt und zwar insbesondere elektrisch. Der Mantel wird also gleichmäßig auf die jeweils gewünschte Temperatur gebracht. Dadurch wird vermieden, dass lokal das Mischgut, also der Ausgangsstoff nebst Fremdmaterial und bereits entstandene Zersetzungsprodukte überhitzt werden können.

Oben auf dem Behälter befindet sich bevorzugt ein Dom, über den gasförmige Bestandteile entnommen werden und der als Beruhigungszone für die oftmals sehr leichten Aschepartikel des unzersetzbaren Pyrolyserückstandes dient. Dadurch wird ein Mitreißen der Aschepartikel vermieden. Der Mantel des Doms ist vorzugsweise beheizbar, so zum Beispiel mit einer von außen regelbaren Elektroheizung oder mit anderen Heizmitteln. Durch Beheizen des Doms kann eine vorzeitige Kondensation von kondensierbaren Bestandteilen vermieden werden.

Aus gleichen Gründen wird vorzugsweise auch das Rohr (Brüdenaustrittsrohr genannt) beheizt, welches entstehendes Gas zu Kondensatoren leitet.

Um die Effektivität des Verfahrens weiter zu steigern, sind folgende Schritte sowohl einzeln als auch in Kombination von Vorteil.

Zunächst werden Fremdpartikel in den Behälter eingefüllt, in dem die Pyrolyse durchgeführt wird. Bewährt hat sich ein Füllgrad von 5 bis 20 %. Anschließend werden die Fremdpartikel auf die gewünschte Temperatur zur Durchführung der Pyrolyse aufgeheizt. Diese Temperatur liegt vorteilhaft 50 bis 100°C oberhalb der Zersetzungstemperatur des Ausgangsstoffs. Im Anschluss daran wird partikelförmiger Ausgangsstoff in den Behälter gefüllt und das Mischgut gemischt. Auf diese Weise beginnt die Zersetzung des Ausgangsstoffs besonders schnell, da sofort Wärme von den Fremdpartikeln auf den Ausgangsstoff übertragen wird. Verklumpungen und Wandablagerungen werden so von Anfang an minimiert.

Um die Temperatur im Inneren des Behälters einstellen, überwachen sowie in Abhängigkeit von der Temperatur die Durchführung des Verfahrens steuern zu können, weist der Behälter zur Durchführung der Pyrolyse im Innenraum zweckmäßig ein oder mehrere Thermoelemente oder andere geeignete Temperaturmessinstrumente auf.

Der partikelförmige Ausgangsstoff wird nun nach und nach dem Mischbehälter zugeführt und zwar vorzugsweise gesteuert durch den Temperaturverlauf im Inneren des Mischbehälters und/ oder den Füllgrad des Mischbehälters. Hinsichtlich der Temperatur ist darauf zu achten, dass der gewünschte Temperaturbereich eingehalten wird, der vorzugsweise 50 bis 100 °C oberhalb der Zersetzungstemperatur des Ausgangsstoffs liegt. Hinsichtlich des Füllgrads ist darauf zu achten, dass dieser einen maximalen Wert nicht überschreitet. Dieser maximale Füllgrad beträgt beispielsweise 70%, um einen ordnungsgemäßen Betrieb zu gewährleisten. Wird der partikelförmige Ausgangsstoff nur nach und nach zugeführt, bis ein vorgegebener maximaler Füllgrad erreicht wird, so wird auch dadurch verbessert eine rasche und vollständige thermische Zersetzung gewährleistet. Alternativ oder ergänzend wird die weitere Zugabe von Ausgangsstoff in Abhängigkeit von der Menge gesteuert, die im Mischbehälter thermisch zersetzt wird. Insbesondere wird die Zufuhr des Ausgangsstoffs so gesteuert, dass diese der pyrolysierten Menge entspricht, um so die rasche und vollständige thermische Zersetzung sicherzustellen. Eine Abschätzung, welche Menge jeweils pyrolysiert wird, kann u. α. über die Menge des entstehenden und entnommenen Gases und/ oder über Gewichtsänderungen des Mischbehälters erfolgen.

Wird ein vorgegebener maximaler Füllgrad erreicht, so wird die Zufuhr von Ausgangsstoff gestoppt und zunächst abgewartet, bis kein Gas mehr entnommen werden kann, um so sicherzustellen, dass der Inhalt des Mischbehälters, also das Mischgut vollständig pyrolysiert ist. Anschließend wird der Feststoff im Inneren des Mischbehälters entnommen und zwar vorzugsweise so, dass ein Füllgrad von 5 bis 20% besonders bevorzugt von 10% verbleibt. Damit sind sehr gute Vorrausetzungen geschaffen, um nach der Entnahme sofort wieder mit der weiteren Zufuhr von Ausgangsstoffen beginnen zu können. Die Entnahme kann bei laufendem Schleuderwerk oder Mischwerkzeuge über eine Entleerungsvorrichtung erfolgen.

Während der Entnahme werden Fremdpartikel, die sich von dem durch thermische Zersetzung entstandenen Feststoff unterscheiden, sofort herausgesiebt und wieder dem Mischbehälter zugeführt und zwar vorzugsweise zusammen mit Ausgangsstoff. Auch auf diese Weise wird die rasche und vollständige Pyrolyse weiter gefördert.

Eine optimierte Verwertung des resultierenden Feststoffes kann darin bestehen, diesen zunächst als Brennstoff einzusetzen und anschließend noch verbliebene nicht brennbare Rückstände weiter zu verwerten, so zum Beispiel als Bodenverbesserer.

Während der Pyrolyse werden gasförmige Zersetzungsprodukte kontinuierlich entnommen. Diese werden dann durch ein oder mehrere Kondensatoren geleitet, um kondensierbare Anteile insgesamt oder getrennt aus dem Gasstrom auszuscheiden. Abschließend wird das Gas vorzugsweise einer Gaswäsche unterzogen, Insgesamt gelingt es so, die verschiedenen flüssigen bzw. gasförmigen Bestandteile in verwertbarer Form zu erhalten.

Für den Fall, dass ein Teil der Zersetzungsprodukte sublimiert, also keine flüssige Endphase bildet, geschieht die Abscheidung durch Kondensation an der Wandung eines geschlossenen Behälters, der mit einem Abschaber ausgestattet ist, um das Sublimat von der Wandung zu entfernen und im unteren Teil des Behälters zu sammeln, von wo es dann bei Bedarf entleert werden kann. Für den Fall, dass die Brüden außer den sublimierenden Anteilen auch noch solche enthalten, die bei der Kondensation eine Flüssigkeit bilden und somit das Sublimat im Absetzbehälter befeuchten oder sogar pastös machen, kann der Absetzbehälter beheizt werden. Die Temperatur muss regelbar sein und ist so zu wählen, dass sie unterhalb der Sublimationstemperatur liegt, in jedem Fall aber höher als die Siedetemperatur der Flüssigphase ist. Die Kondensation dieser Flüssigphase erfolgt dann in einem nachgeschalteten Kondensator mit geeigneter Kühlung.

Wenn in den als kondensierbare Dämpfe anfallenden Zersetzungsprodukten Verbindungen enthalten sind, die bei der Kondensation bei Raumtemperatur zu einem Teil als Flüssigkeit, zum anderen auch als hochviskose Stoffe anfallen, kann es erforderlich sein, dass man wenigstens zwei Kondensatoren hintereinander schalten muss. Der erste wird mit einer Temperatur betrieben, der die hochviskose Phase des Kondensats verhindert. Der Sammelbehälter für dieses Kondensat muss ebenfalls beheizt sein, damit das Kondensat entleert werden kann. In dem zweiten Kondensator werden die Restbrüden mit Flüssigkeiten von niedrigerem Siedepunkt bei entsprechend tieferer Temperatur abgeschieden.

Die nach der Kondensation noch anfallenden Zersetzungsgase müssen in vielen Fällen vor der weiteren Verwendung von störenden Verbindungen befreit werden. Diese Gasreinigung erfolgt mittels einer Nasswäsche, bei der das Gas durch eine geeignete Flüssigkeit geführt wird, welche die störenden Stoffe absorbiert. In manchen Fällen kann die Gasreinigung auch derart erfolgen, dass als Absorptionsmittel Aktivkohle eingesetzt wird.

In einer Ausführungsform wird Tiermehl thermisch zersetzt. Bei Tiermehl ist es ganz besonders wichtig, dass dieses möglichst vollständig thermisch zersetzt wird, um Probleme hinsichtlich BSE und sonstigen Krankheitserregern zu vermeiden. Durch das vorliegende Verfahren wird die vollständige Zersetzung im Vergleich zum Stand der Technik deutlich verbessert sichergestellt. Gerade in Bezug auf Tiermehlzersetzung existieren gesetzliche Bestimmungen und strenge Kontrollen, mit denen erreicht werden soll, dass aus Tiermehl gewonnene Feststoffe keine Stickstoffreste mehr enthalten, die ein Maß für eine unzureichende Zersetzung darstellen. Mit der Erfindung wurde erreicht, das Stickstoffreste in Feststoffprodukten im Anschluss an die thermische Zersetzung von Tiermehl nicht mehr nachgewiesen werden konnten.

Da die thermische Zersetzung sehr gleichmäßig gelingt, gelingt ferner eine verbesserte Trennung zwischen den entstehenden Produkten im Vergleich zum genannten Stand der Technik. Die Trennung der gasförmigen, flüssigen und festen Produkte ist also besonders gut, wie eine Überprüfung u.a. am Beispiel Tiermehl ergeben hat. Die Rückstandsasche von Tiermehl wurde untersucht. Der Stickstoffgehalt war kleiner 0,01 Gew,-%. Damit war die Nachweisgrenze unterschritten worden. Sämtliche diesbezüglichen Vorschriften der Europäischen Gemeinschaft wurden erfüllt. Dies war nach dem Stand der Technik nicht möglich.

Die thermische Zersetzung von Tiermehl wurde in einem Beispiel wie folgt durchgeführt.

Es wird ein Horizontalmischer mit einem Volumen von 50 Litern verwendet. Vier an einer Achse befestigte Mischarme weist der Mischer im Inneren auf. Die Mischarme umfassen pflugscharähnliche Schleuderschaufeln nebst Rückförderblechen in oben beschriebener Weise. Der Mantel des Horizontalmischers wird vollflächig elektrisch beheizt, so dass dieser gleichmäßig auf Temperatur gebracht wird. Die Heiztemperatur beträgt 650°C. Die Pyrolysetemperatur beträgt dann schätzungsweise 450°C +/-20°C. Mit 60 Umdrehungen/min wird die Achse mit den Mischwerkzeugen gedreht. Die Länge des Mischers beträgt 400 mm und der Durchmesser ebenfalls 400 mm. Es herrscht ein leichter Unterdruck von ca. 950mbar. Der Mischer wird quasikontinuierlich gefahren. Mit einer Dosierschnecke wird das Tiermehl von einem Vorfüllbehälter dem Mischer zugeführt. Im Vorfüllbehälter wird sicher gestellt, dass immer eine gewisse Tiermehlmenge oberhalb der Schnecke liegt. Dadurch wird sichergestellt, dass kein Sauerstoff in den Mischbehälter gelangt. Eisenkugeln mit einem Durchmesser von 2 bis 4 mm werden als Fremdpartikel eingesetzt. Anfangs wird der Mischraum mit ca. 10% seines Volumens mit Eisenkügelchen befüllt. 25 kg Eisenkügelchen werden insgesamt eingesetzt. Nachdem die Kugeln die Pyrolysetemperatur erreichen, wird dem Mischer Tiermehl über den Vorfüllbehälter zugeführt.

Während des Betriebs ist der Horizontalmischer auf eine Waage gestellt. Anhand so gemessener Gewichtsveränderungen wird kontrolliert, dass der jeweils gewünschte Füllgrad nicht überschritten wird, da die Gewichtsveränderung ein Maß für den Füllgrad ist.

Innerhalb von 5 Stunden wird dem Mischer 35kg an Tiermehl zugeführt und zwar werden 7 kg/Stunde eingespeist. Kontinuierlich wird das durch die Zersetzung entstehende Gas nahe bei einer Stirnwand des Mischers nach oben hin abgeleitet und so entnommen. Der durch die Pyrolyse entstandene Feststoff verbleibt zunächst im Mischer. Wird im Mischer ein Füllgrad von 70% erreicht, so wird die Pyrolyse noch fortgesetzt, bis kein Gas mehr entnommen werden kann. Hierdurch wird sichergestellt, dass auch zuletzt eingespeistes Tiermehl vollständig zersetzt wird. Dann wird die Pyrolyse unterbrochen und der Feststoff mit Ausnahme eines Füllgrads von 10% wird nach unten entnommen.

Vorzugsweise werden entstehende Gase und Feststoffe bei einer Stirnseite des Mischbehälters des Horizontalmischers entnommen, die der Seite gegenüberliegt, über die Ausgangsstoffe in den Behälter transportiert werden. Werden nun Feststoffe nicht vollständig entnommen und das entstehende Gas nach oben aus dem Behälter herausgeleitet, so wird dadurch weiter verbessert sichergestellt, dass nur vollständig zersetzte Produkte entnommen werden.

Eine Restmenge eines Gemischs aus Eisenkügelchen und dem aus dem Tiermehl gewonnen Feststoff verbleibt im Mischer, um so sofort wieder die Pyrolyse fortsetzen zu können. Die Eisenkügelchen weisen eine gute Wärmeleitfähigkeit im Sinne der Erfindung im Unterschied zu den Feststoffen auf, die bei der thermischen Zersetzung von Tiermehl entstehen.

Die Kügelchen werden aus dem entnommenen Feststoff herausgesiebt und werden vorzugsweise wieder dem Vorfüllbehälter hinzugefügt. Auf diese Weise wird das im Vorfüllbehälter befindliche Tiermehl wieder etwas vorgewärmt und so die Pyrolyse weiter gefördert.

Die aus dem Tiermehl resultierende Asche besteht aus Kohlenstoff und anorganischen Bestandteilen wie Kalziumoxid, Kalziumcarbonat, Sulfate und Nitrate. Die Asche ist nach Durchführung der beschriebenen Zersetzung vollkommen frei von organischen Bestandteilen.

In einer weiteren Ausgestaltung der Erfindung unabhängig von dem bisher beschriebenen Verfahren wird die aus Tiermehl gewonnene Asche verbrannt, so z. B. bei 750°C. Es verbrennt dabei der Kohlenstoff der Asche. Übrig bleiben die anorganischen Bestandteile, die hervorragend weiterverwendet werden können, u. a. als Bodenverbesserer.

Das bei der Tiermehlzersetzung entstandene Gas wird zunächst von kondensierbaren Gasanteilen durch Kondensation befreit und dann durch eine Schwefelsäurelösung geführt, um so das verbliebene Gas von Ammoniak zu befreien. Es resultiert hieraus ein hervorragend brennbares Gas.

Das erhaltene Gas umfasst Methan, Ethan, Butan usw. Die Gase werden beispielsweise zur Verbrennung in Kraftwerken eingesetzt. Das verbliebene Kondensat ist ein Schweröl, welches beispielsweise in Panzermotoren verbrannt werden kann. Es gelingt also eine Verwertung sämtlicher Zersetzungsprodukte von Tiermehl, ohne das gesundheitliche Bedenken bestehen bleiben.

Das Verfahren wird vor allem auch bei der Kunststoffwiederverwertung von Kunststoffgemischen eingesetzt. Kunststoffgemische werden wieder in ihre chemischen Ausgangssubstanzen zerlegt. Anschließend können aus diesen Ausgangssubstanzen wieder die einzelnen reinen Basiskunststoffe hergestellt werden. Bisher wurden nach dem Stand der Technik solche Kunststoffgemische zunächst zerkleinert und verschmolzen. Die nach diesem Verfahren wieder verwendeten Kunststoffgemische durften beispielsweise nicht noch einmal für Lebensmittelverpackungen verwendet werden. Diese konnten lediglich für die Herstellung von Parkbänken etc. eingesetzt werden. Die nach dem erfindungsgemäßen Verfahren wieder gewonnenen Kunststoffe können nun auch wieder in der Lebemittelindustrie eingesetzt werden. Aus einem Mischkunststoff bestehende Erstware kann also wieder die gleiche Erstware hergestellt werden. Es muss keine Zweitware wie Parkbänke aus wiederverwerteten Kunststoffen hergestellt werden.

Im Übrigen können die aus Kunststoff entstehenden Endprodukte auch zur Energiegewinnung eingesetzt werden.

Besonders gut ist dieses Verfahren für Kunststoffgemische und nicht für sortenreine Kunststoffe geeignet, weil sortenreine Kunststoffe auf andere Weise besser wieder aufbereitet werden können. Bei Kunststoffgemischen ist dies derzeit problematisch. Die vorliegende Erfindung löst also ein spezielles Problem bei Kunststoffgemischen, auch wenn technisch gesehen es in gleicher Weise auch bei sortenreinen Kunststoffen angewendet werden kann.

Das Verfahren wurde anhand einer thermischen Zersetzung von Ölschlämmen, basischem Glyzerin aus einer Biodieselgewinnung, Lackschlämmen, kontaminierten Böden, beschichtetem Holz und diversen Kunststoffgemischen überprüft. Es gelang stets eine sehr viel vollständigere thermische Zersetzung im Vergleich zum Stand der Technik. Es ist daher die Schlussfolgerung erlaubt, dass nach dem vorliegenden Verfahren organische Ausgangsstoffe verbessert thermisch zersetzt werden können.

Das Verfahren ist umweltfreundlich. Deponien können so entlastet werden. Das Verfahren läuft regelmäßig energetisch neutral ab. Die Energie wird in etwa wiedergewonnen, die für das Pyrolyseverfahren aufgewendet werden muss.

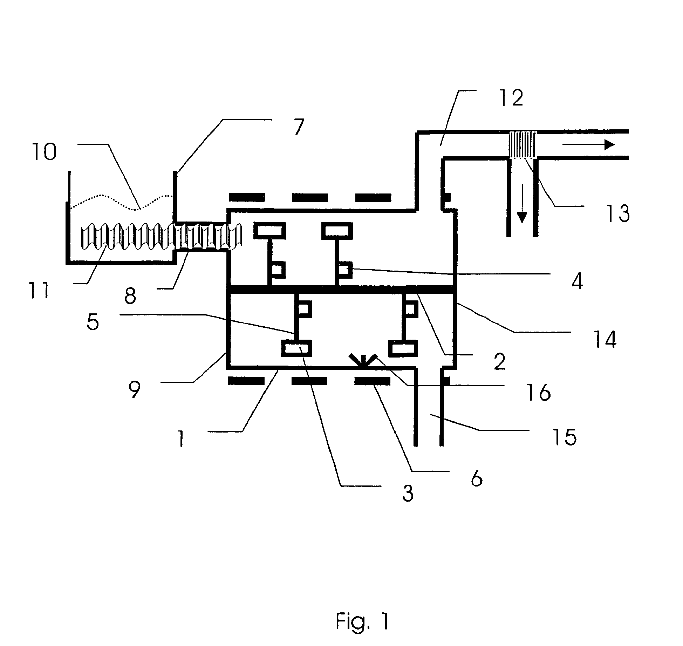

Die Figur 1 zeigt schematisch einen horizontalen Mischer 1 mit einer drehbar gelagerten, horizontalen Achse 2. An der Achse 2 sind wandnahe Schleuderschaufeln 3 und achsennahe Rückförderbleche 4 über Arme 5 angebracht. Bei entsprechender Rotation der Achse fördern die Schleuderschaufeln 3 im Behälter befindliches Mischgut in Richtung Achse und die Rückförderbleche fördern das Mischgut zurück in Richtung Achse 2. Der Mischer 1 weist elektrische Heizelemente 6 auf, die sich über die gesamte Mantelfläche des Mischbehälters erstrecken. Die Mantelfläche wird also vollständig beheizt. Ein Vorfüllbehälter 7 ist über ein Rohr 8 mit einer Stirnwand 9 des Mischers 1 verbunden. Ein partikelförmiger Ausgangsstoff kann mit oder ohne Fremdpartikel in den Vorfüllbehälter gegeben werden. Der Ausgangsstoff wird dann mittels einer Transportschnecke 11 in den Mischer transportiert. Dabei ist darauf zu achten, dass eine Füllhöhe 10 im Vorfüllbehälter nicht unterschritten wird, so dass die Transportschnecke 11 stets vollständig bedeckt ist.

In beschriebener Weise wird dann der Ausgangsstoff im Horizontalmischer thermisch zersetzt. Wie beschrieben wird nahe bei der gegenüberliegenden Stirnseite entstehendes Gas nach oben durch ein Rohr 12 entnommen. Aus dem Gas werden dann kondensierbare Anteile durch einen Kondensator 13 abgetrennt und nach unten herausgeführt. Nicht kondensierbare Gasanteile werden nach rechts weiter geleitet und weiter verarbeitet.

Durch ein nahe der anderen Stirnseite 14 angeordnetes, nach unten führendes Rohr 15 werden wie beschrieben durch thermische Zersetzung entstandene Feststoffe entnommen. Ein Messerkopf 16 kann an einer Wand angebracht sein, um einer Klumpenbildung weiter verbessert entgegenzuwirken.

Bei einem Horizontalmischer ist es im Vergleich zu einem Drehrohr einfacher, den erforderlichen Sauerstoffausschluss während der Pyrolyse zu gewährleisten.

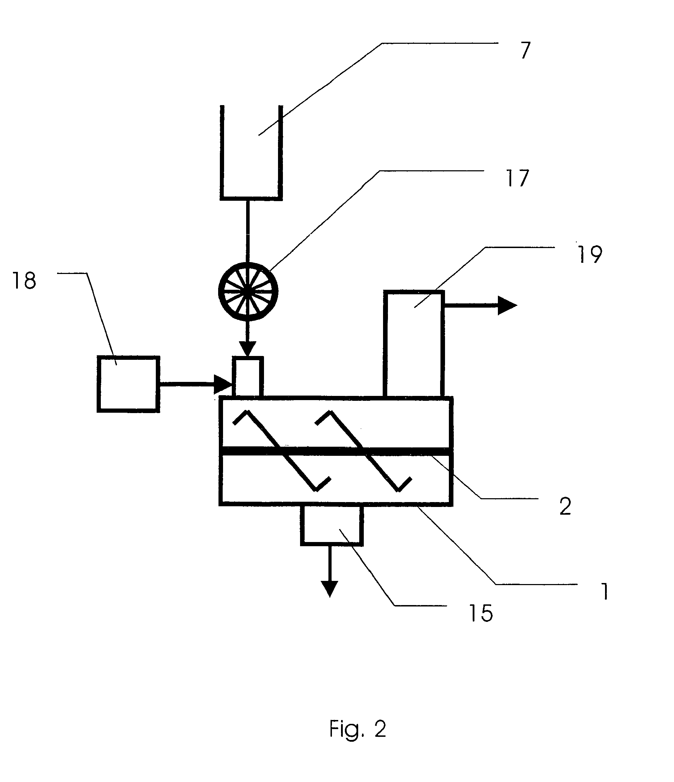

Figur 2 zeigt schematisch eine andere Ausführungsform einer Vorrichtung zur Durchführung des Verfahrens. Anstelle einer Schnecke wird hier eine Zelienradschleuse 17 eingesetzt, um Ausgangsstoffe vom Vorfüllbehälter gesteuert so getrieben durch die Schwerkraft dem Horizontalmischer 1 zuzuführen. Es gibt ferner eine Inertgaszuführung 18, die so angeordnet ist, dass Inertgas zusammen mit Ausgangsstoffen in den Mischer 1 gelangt, was beispielsweise bei Explosionsgefahr von Vorteil sein kann. Ein Dom 19 dient als Beruhigungszone, damit Asche und dergleichen nicht in den Gasabfluss gelangt.

Mit der Erfindung können Lebensmittel, Schlachthausabfälle, Viehmehl, Fischmehl, Kunststoffe, Elastomere, Gummi- und Kautschukprodukte, Holz, Papier, Gewebe, biologisch abbaubare Restprodukte, Schweröle oder deren Rückstände sowie Abfallmischungen aus den vorgenannten Produkten vollständig thermisch zersetzt werden.

In einem weiteren Ausführungsbeispiel der Erfindung wurde Polymetacrylat-Abfall, also Plexiglas® pyrolysiert. Die Pyrolyse wurde mit einem Horizontalmischer der Firma Gebrüder Lödige Maschinenbau GmbH, Paderborn, Deurschland, durchgeführt, der unter der Bezeichnung VT20 kommerzlell erhältlich ist. Die Zahl 20 kennzeichnet das Volumen des Mischers, nämlich ein Mischervolumen von 20 Litern. Die Mischtrommel wurde von außen elektrisch beheizt. Während des gesamten Versuchs betrug die Drehzahl des Schleuderwerks 100 U/min. Zunächst wurden 11,5 kg Eisenkugeln mit einem Durchmesser von 0,5 mm bis 1,0 mm in den Horizontalmischer gefüllt. Es wurde ein leichtes Vakuum angelegt, um entstehendes Zersetzungskondensat abzuziehen. Nach Erreichen einer Temperatur der Metallkugeln von ca. 470° C wurde In Abständen von jeweils einer Minute jeweils 100 Gramm Polymetacrylat-Abfall unter einer Sttokstoffatmosphäre zugegeben. Die Produkttemperatur durfte dabei einen Wert von 350° C nicht unterschreiten, damit die Pyrolyse optimal verlief. Um die gewunschte Pyrolysetemperatur von 470° C im inneren sicherzustellen, wurde an der Trommelaußenfläche eine Temperatur von ca. 600° C angelegt. Anhand der entnommenen Kondensatmenge konnte festgestellt werden, dass Innerhalb der Zugabezelt die Zersetzung vollständig ablief. Da bei der Pyrolyse von Plexiglas praktisch keine Feststoffe entstehen, wurden während des versuchs weder Feststoff noch Metallkugelchen entnommen. Zur Entnahme der entstehenden Zersetzungskondensate wurde der Brüden abgezogen und kondensiert. Als Kondensat wurde sehr reine Metacrylsäure erhalten. Das erhaltene Kondensat war derart rein, dass es für die Polymerisation im Anschluss daran ohne eine weitere Vorbehandlung eingesetzt werden konnte. Es war also beispielsweise möglich, technisches Plexiglas aus der erhaltenen Metacrylsäure herzustellen. Im Rahmen eines 32 Minuten andauernden Versuchs wurden 2.100 Gramm Plexiglas zugeführt. Es wurde 1.740 Gramm Kondensat erhalten. Die Gewichtsdifferenz resultierte aus festen Rückständen.

Ohne Verwerdung der Kügelchen wäre eine Pyrolyse von Plexiglas in der beschriebenen Weise nicht möglich gewesen. Andernfalls wäre es zu Kunststoffaufschmelzungen gekommen, die Kaum zu beherrschen gewesen wären.

In einem weiteren Ausführungsbelspiel der Erfindung wurde eine Pyrolyse von Röntgenfilm-Schnitzein durchgeführt, also zerschnittene Röntgenfilrne, Wie, diese in der Medizin anfallen. Eingesetzt wurde ein kommerziell erhältlicher Horizontalmischer DVT50 der Firma Lödlge, also ein Mischer mit einem Mischvolumen von 50 Litern. Die Trommel des Horizontalmischers wurde elektrisch behelzt und vollständig wärmelsoliert. Die Drehzahl betrug während des Versuchs kontinuierlich 45 U/min. Die Helztemperatur betrug 650°C. Aus innertisierungsgründen wurde kontinuierlich Stickstoff in den Brüdenstutzen des Horizontalmischers eingeleitet. Insgesamt wurden 25 kg Stahlkugein mit einem Durchmesser von 1,4 bis 2,0 mm in den Mischer gefüllt und auf 450° C aufgeheizt, im Anschluss daran wurden die geschredderten Röntgenfilme in Portionen von 2,0 Litern im Abstand von 5 min über ein Fallrohr mit handbetätigter Klappe zugegeben und zwar innerhalb von 75 min insgesamt 9,1 kg Röntgenfilm-Schnitzel. Aus Sicherheitsgründen wurde noch 30 Minuten lang nach Abschluss der Zugabe von Röntgenfilm-Schnitzeln die Pyrolyse fortgesetzt. Im Anschluss an die Pyrolyse wurde der Inhalt des Horizontalmischers out 40°C obgekühlt und der abgekühlte Feststoff nach unten entnommen. Die Kugeln wurden herausgesiebt. Es resultierte 1 kg Kohlenstoff mit metallischem Silberanteil.

Der Mischer umfasste einen gekühlten Abscheldebehälter mit Tauchrohr. Die bei der Pyrolyse entstehenden flüchtigen Produkte wurden kontinuierlich diesem gekuhlten Abscheidebehälter mit Tauchrohr zugeführt, im Abscheidebehälter sublimierten die flüchtigen Bestandtelle. Es entstand bis zum Versuchsende 2 kg leicht feuchtes Material, das im Wesentlichen aus Terephthalsäure mit mitgerissenem Kohlenstoff bestand. Bis auf leichte Anhaftungen an den Schaufelarmen der Mischerwerkzeuge des Horizontalmischers war der innenraum des Horizontalmischers sowie die beheizte Brüdenleltung frei von Produktablagerungen.

Die Feuchte im Produkt im Abscheidebehälter war ein Kondensat, welches aufgrund einer entsprechenden Temperaturführung abgeschieden werden konnte.

Anstatt Röntenfilm-Abfall vergleichsweise teuer entsorgen zu müssen, wurde durch das erfindungsgemäße Verfahren Tetephthalsäure gewonnen, die beispielsweise für eine Herstellung von neuen Röntgenfilmen eingesetzt werden konnte. Das Silber konnte aus dem Kohlenstoff-Silber-Germisch in konventioneller Weise abgeschieden werden. Es wurde so reines metallisches Silber erhalten.

In einem weiteren Ausführungsbeispiel wurde Fluff pyrolysiert, also Autobestandteile mit Ausnahme von Karosserieblech und sonstigen größeren, leicht abzutrennenden metallischen Autotellen. Eingesetzt wurde wiederum ein Horizontalmischer DVT50 der Firma Lödige, dessen Trommel elektrisch mit 500° C beheizt wurde. Die Schleuderwerkdrenzahl betrug 37 U/min. Es wurden 25 kg Metailkugeln eingefüllt und zunächst auf 400°C aufgeheizt. Eine Inertisierung mit Stickstoff wurde wie im vorgenannten Versuch durchgeführt. Der Durchmesser der Stahlkugeln betrug wiederum 1,4 bis 2,0 mm.

Nachdem die Metallkügelchen eine Temperatur von 400°C erreicht hatten, wurde insgesamt 3,0 kg Fluff in den Mischer innerhalb von 3 Minuten eingefüllt. Nach 24 min wurde im Verlauf der nächsten sechs Minuten ein geringer Kondensatanfall festgestellt. Aus Sicherheitsgründen wurde weitere 15 Minuten pyrolysiert, um so die Vollständigkeit der Pyrolyse sicherzusteilen. Nach Beendigung des Versuchs wurde der Mischer abgekühlt, bis die Produkte im innern weniger als 40°C warm waren.

Während des gesamten Versuchs wurde Kondensat in kurzen Zeitabständen, entnommen. Es resultierte 0,57 kg Pyrolysekondensat mit einer Dichte von 0,98 kg/l. Es handelte sich um Öl, weiches im Rahmen der Zersetzung entstanden war. Es verblieb ein Rückstand an von 1,65 kg im Mischer, der auch noch Bestandteile von Metallen enthielt. Der Rest war gasförmig, konnte aber durchaus noch Bestandteile enthalten, die bei tieferer Kondensationstemperatur flüssig sein können. Insgesamt wurde so brennbares Material in Form von Öl und Gas erhalten. Der Rückstand stellte keinen Sondermüll mehr dar. Eine sehr viel teurere Entsorgung des Sondermülls "Fluff" konnte also erfindungsgemäß vermleden werden.

In einem weiteren Ausführungsbeispiel wurde eine Pyrolyse von Holz durchgeführt. Bei der Pyrolyse von Holz kommt es darauf an, dass die Pyrolyse zeitlich gesehen sehr Schnell durchgeführt wird (Flast-Pyrolyse), damit ein qualitativ hochwertiges Holzöl erhalten wird. Dazu muss das eingesetzte Holz in möglichst kleinen Stücken vorliegen. Außerdem soil die Pyrolysetemperatur ständig zwischen 460 und 480 °C liegen.

In einem Horizontalmischer DVT 50 der Firma Lödige, dessen Mischtrommel elektrisch auf 600 °C beheizt wurde und dessen Schleuderwerksdrehzahl 90 U/min betrug, wurden 25 kg Eisenkugeln von 1 - 1,5 mm Durchmesser gegeben.

Nachdem die Kugeln eine Temperatur von 490 °C erreicht hatten, wurden 0,6 kg Holzgranulat (0,5 - 4 mm Korngröße) zugegeben. Durch die kalte Holzmenge und die eintretende Zersetzung sank die Produkttemperatur auf 460 °C, um nach 5 Minuten wieder den Wert von 485 °C zu erreichen. So wurden jeweils im Abstand von 5 Minuten jeweils 0,6 kg Holzgranulat in den Pyrolyseprozess eingeführt.

Das sich während der Pyrolyse bildende Gas und der Brüdendampf wurden durch einen wassergekühlten Röhrenkondensator geleitet, in dem der Brüden kondensiert und In einem Vorratsgefäß gesammelt wurde. Das Gas wurde abgefackelt.

Es wurde eine Holzölmenge von 40% bezogen auf die eingesetzte Holzmenge erhalten. Die erzielte Gasmenge und der Restkohlenstoff wurden nicht gemessen.

In einem weiteren Ausführungsbeispiel wurde eine Pyrolyse von Altreifen durchgeführt.

Als Versuchapparat diente ein Horizontalmischer der Firma Lödlge, dessen Mischtrommem elektrisch auf 650 °C beheizt wurde und dessen Schleuderwerksdrehzahl 90 U/mm betrug. Es wurden 25 kg Eisenkugeln von 1-1,5 mm Durchmesser eingefüllt.

Nachdem die Eisenkugeln 560°C erreicht hatten, wurde 1 kg geschredderte Altreifen eingefüllt. Die Größe der Relfenstücke betrug max. 10x10x2 cm. Nach einer Verweilzeit des Produktes von 10 Minuten konnte kein Kondensatanfall mehr festgestellt werden, was bedeutete, dass die Zersetzung abtgeschlossen war. Im weiteren Versuchsablauf wurden alle 10 Minuten Jewells 1 kg Reifenabfälle in den Mischer gegeben. Die Produkttemperatur betrug während des gesamten Versuchs zwischen 540 und 560 °C. Während der gesamten Versuchsdauer wurde keine Zähphase des Produktes erhalten.

Die entstehende Brüden wurden in einem wassergekühlten Rohrbündelkondensator abgeschieden und In einem Sammelbehälter aufgefangen. Das Pyrolysegas wurde abgefackelt. Es wurden 29 % Pyrolyseöl gezogen auf die eingesetzte Reifenmenge erhalten. Das Restprodukt lag in feinpulveriger Form in der Mischertrommel vor und beinhaltet außerdem die Stahldrahtstücke der Karkasse.

## Patentansprüche

1. Verfahren zur Zersetzung eines Ausgangsstoffes, Insbesondere organischen Ausgangsstoffs in gasförmige, flüssige und/ oder feste Produkte durch Pyrolyse, **dadurch gekennzeichnet, dass** ein Ausgangsstoff zusammen mit Fremdpartikeln in einem Behälter eines Horizontalmischers während der thermischen Zersetzung bewegt werden, wobei das Material der Fremdpartikel durch die Pyrolyse weder thermisch zersetzt noch verflüssigt wird, wobei der Ausgangsstoff kontinuierlich dem Behälter des Horizontalmischers zugeführt wird, die während der Pyrolyse im Behälter entstehenden Gase kontinuierlich entnommen werden, die Zuführung von Ausgangsstoffen unterbrochen wird, wenn ein vorgegebener Füllgrad des Behälters überschritten wird, und im Anschluss daran dem Behälter Feststoff teilweise entnommen wird, sobald kein Gas mehr entnommen werden kann.

2. Verfahren nach Anspruch 1, bei dem als Ausgangsstoff Sondermüll, Tiermehl, ölschlamm, Autofluff, Altreifen von Kraftfahrzeugen, basisches Glyzerin, Lackschlamm, kontaminierter Boden, beschichtetes Holz oder Kunststoff eingesetzt wird.

3. Verfahren nach Anspruch 1 oder 2, bei dem der Behälter, in dem die Pyrolyse durchgeführt wird, wenigstens zu 5% mit Fremdpartikeln befüllt wird, vorzugsweise wenigstens zu 10%.

4. Verfahren nach einem der vorhergehenden Ansprüche, bei dem das Material der Fremdpartikel aus Eisen oder Stahl besteht.

5. Verfahren nach einem der vorhergehenden Ansprüche, bei dem die Fremdpartikel einen Durchmesser von 0,5 bis 5 mm, bevorzugt von 1 bis 2mm aufweisen.

6. Verfahren nach einem der vorhergehenden Ansprüche, bei dem durch thermische Zersetzung entstandene Feststoffe der Pyrolyse wieder zugeführt werden.

7. Verfahren nach einem der vorhergehenden Ansprüche, bei dem ein partikelförmiger Ausgangsstoff aus einem Vorfüllbehälter mit einer Schnecke unter Luftabschluss In den Behälter eines Mischers transportiert wird, wobei die Zuführung so gesteuert wird, dass die Schnecke stets von dem Ausgangsstoff im Vorfüllbehälter vollständig bedeckt wird.

8. Verfahren nach einem der vorhergehenden Ansprüche 1 bis 7, bei dem Kunststoffgemische als Ausgangsstoff eingesetzt werden und aus den durch die thermische Zersetzung entstandenen Produkten Kunststoffe hergestellt werden.

## Claims

1. Method for decomposing an initial material, in particular an organic initial material, into gaseous, liquid and/or solid products by pyrolysis, **characterized in that** an initial material is moved in a container of a horizontal mixer together with foreign particles during the thermal decomposition, with the material of the foreign particles being neither thermally decomposed nor liquefied during the pyrolysis, wherein initial materials are supplied to the container of the horizontal mixer continuously, the gases produced in the container during pyrolysis are withdrawn continuously, the supply of initial materials is stopped when a predetermined filling level of the container is exceeded, and subsequent to that, solids are partially withdrawn from the container as soon as no gas can be withdrawn anymore.

2. Method according to Claim 1, wherein hazardous waste, meat and bone meal, oil sludge, autofluff, used tires of vehicles, basic glycerin, paint sludges, contaminated soils, coated wood or plastics are used as initial material.

3. Method according to Claim 1 or 2, wherein the container in which the pyrolysis is carried out is filled with foreign particles to at least 5%, preferably to at least 10%.

4. Method according one of the preceding claims, wherein the material of the foreign particles consists of iron or steel.

5. Method according to one of the preceding Claims, wherein the foreign particles have a diameter of 0.5 mm to 5 mm, preferably of 1 to 2 mm.

6. Method according to one of the preceding Claims, wherein solids produced by thermal decomposition are resupplied to the pyrolysis.

7. Method according to one of the preceding claims, wherein a particulate initial material is transported from a prefilling container into the container of a mixer by means of a worm under the exclusion of oxygen, the feed being controlled in such a way that the worm is always covered completely by the initial material in the prefilling container.

8. Method according to one of the preceding claims 1 to 7, wherein plastics mixtures are used as initial material and plastics are produced from the products produced by the thermal decomposition.

## Revendications

1. Procédé de décomposition d'une matière de base, notamment d'une matière de base organique en produits gazeux, liquides et/ou solides au moyen de pyrolyse, **caractérisé en ce qu'**on agite une matière de base ensemble avec des particules étrangères dans un récipient d'un mélangeur horizontal au cours de la décomposition thermique, dans lequel la matière des particules étrangères n'est ni thermiquement décomposée ni liquéfiée, la matière de base étant continument amenée au récipient du mélangeur horizontal, les gaz générés dans le récipient au cours de la pyrolyse étant continument prélevés, l'alimentation en matières de base étant interrompue si un niveau de remplissage prédéterminé est excédé, et faisant suite à cela on prélève partiellement de la matière solide du récipient dès qu'on ne peut plus prélever du gaz.

2. Procédé selon la revendication 1, dans lequel on utilise des déchets particuliers, de la farine carnée, des boues de pétrole, des résidus de shredder d'autos, des pneus usagés des véhicules à moteur, de la glycérine basique, des boues de peinture, du sol contaminé, du bois revêtu ou des matières artificielles en tant que matière de base.

3. Procédé selon la revendication 1 ou 2, dans lequel on remplit au moins 5 %, de préférence au moins 10 % du récipient dans lequel se fait la pyrolyse avec des particules étrangères.

4. Procédé selon l'une des revendications précédentes, dans lequel la matière des particules étrangères est constituée par le fer ou l'acier.

5. Procédé selon l'une des revendications précédentes, dans lequel les particules étrangères présentent un diamètre compris entre 0,5 et 5 mm, de préférence entre 1 et 2 mm.

6. Procédé selon l'une des revendications précédentes, dans lequel des matières solides générées par moyen de la décomposition thermique sont ramenées à la pyrolyse.

7. Procédé selon l'une des revendications précédentes, dans lequel une matière de base sous forme de particule est transportée à l'aide d'une vis sans fin à l'abri de l'air d'un récipient de pré-remplissage à un récipient d'un mélangeur, l'alimentation étant commandée de sorte que la vis sans fin est toujours couverte par la matière de base dans le récipient de pré-remplissage.

8. Procédé selon l'une des revendications précédentes 1 à 7, dans lequel on utilise des mélanges de matières artificielles en tant que matière de base et on produit des matières artificielles à partir des produits générés par moyen de la décomposition thermique.
